(19) Europäisches Patentamt
European Patent Office
Office européen des brevets

(11) **EP 1 619 485 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
**G01K 15/00** *(2006.01)*

(21) Anmeldenummer: **05018737.6**

(22) Anmeldetag: **24.02.2004**

(54) **Temperaturmessfühler**

Temperature sensor

Capteur de température

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**25.01.2006 Patentblatt 2006/04**

(62) Dokumentnummer(n) der früheren Anmeldung(en) nach Art. 76 EPÜ:
**04004153.5 / 1 568 980**

(73) Patentinhaber: **Electrovac, Fabrikation elektrotechnischer Spezialartikel Gesellschaft m.b.H.**
**3400 Klosterneuburg (AT)**

(72) Erfinder:
• **Reiter, Werner**
**1030 Wien (AT)**
• **Marx, Christian**
**3435 Zwentendorf (AT)**

(74) Vertreter: **Gibler, Ferdinand**
**Gibler & Poth Patentanwälte OEG**
**Dorotheergasse 7**
**1010 Wien (AT)**

(56) Entgegenhaltungen:
**EP-A- 0 806 886        US-A- 6 155 711**

**Beschreibung**

Die Erfindung betrifft ein Verfahren zur Kalibrierung von Temperatur-Messfuhlem in einem Heizbereich eines Keramikkochfeldes mit einer Recheneinheit , die mit den Messfühlern über elektrische Leitungen verbunden sind, wobei ein kalibrierter Standardmessfühler beliebiger Ausführung, wie z.B. ein Thermoelement, Thermistor, oder auch ein Platinwiderstandssensor mit bekanntem temperaturabhängigem Widerstand $R_S(T)$, insbesondere ein PT-100- oder PT-1000-Sensor, im Bereich der Recheneinheit vorgesehen ist, wobei im Terrxperaturgleichgewicht, insbesondere vor der ersten Inbetriebnahme der Heizbereiche , die Messfühler mit dem Standardmessfühler abgeglichen werden, und die entsprechenden Kalibrierwerte in einer Speichereinheit der Recheneinheit abgelegt werden. Bei üblichen Elektroherden, insbesondere mit Keramikkochfeld, sind pro Heizung ein elektromechanischer Schutztemperaturbegrenzer für die Begrenzung auf die maximale Temperatur vorhanden. Wird das Kochfeld mit einer Elektronik gesteuert, so ist eine Substitution der mechanischen Temperaturbegrenzer durch elektronische Temperaturfühler möglich, da die notwendigen Leistungsschalter (Relais) bereits vorhanden sind. Bei den verwendeten elektronischen Steuereinheiten ist häufig auch im Bereich der Elektronik eines Elektroherdes ein Messfühler angeordnet.

Für die Betriebssicherheit des Kochfeldes ist es wichtig, dass diese Messfühler kalibriert sind und so zuverlässig die Temperatur des jeweiligen Kochfeldes erfassen. Die Kalibrierung von Messfühlern erfordert jedoch einen beträchtlichen Aufwand und verursacht somit nicht unerhebliche Kosten. Beispielsweise müssen Widerstandsmessfühler in irgend einer Form getrimmt werden, wobei dieses Trimmen nicht nur zusätzliche Kosten verursacht, sondern zusätzlich die Qualität des Messfühlers beeinträchtigt sowie die Größe des Messfühlers mitbestimmt.

Die EP 0 806 886 A beschreibt ein Verfahren zur Temperaturmessung an einer Kochstelle mit einem Leiterbahntemperatursensor, wobei zur Kompensation unerwünschter Widerstandsänderungen der Leiterbahn ein zusätzlicher Temperatursensor, vorzugsweise ein Halbleitersensor oder ein Pt100-Sensor, vorgesehen ist.

Die US 6 155 711 A beschreibt ein Verfahren zum Kalibrieren von Temperaturmesswiderständen auf Trägern aus Glas, Glaskeramik, technischer Keramik oder Kristall, insbesondere von Leiterbahnwiderständen auf Kochflächen aus Glaskeramik, wobei zur Bestimmung der Temperatur-Widerstands-Charakteristik des Temperaturmesswiderstands die einem gemessenen Widerstandswert zugeordnete Temperatur über den temperaturabhängigen elektrischen Widerstand des Trägermaterials ermittelt wird.

Ein spezifisches Anliegen dieser Erfindung ist die Ausgestaltung und Herstellung eines Widerstands-Messfühlers, wobei keine weiteren Kalibrierschritte vor dessen Einbau in das Kochfeld vorgenommen werden müssen. Widerstände, welche auf Grund ihrer definierten temperaturabhängigen elektrischen Leitfähigkeitscharakteristika zur Temperaturmessung herangezogen werden, sind hinlänglich bekannt. Die DE 3100852 berichtet von der Anwendung mäanderförmig angeordneter temperaturabhängiger Dünnschicht- bzw. Dickschicht-Widerstände zu Heiz bzw. Temperaturmesszwecken. In besonderer Ausgestaltung wird hier die Aufbringung von dünnen Pt oder Ni Bahnen auf $Al_2O_3$ vorgeschlagen. Weitere als Prior Art aufzufassende Schriften diesbezüglich sind beispielsweise die US 4371861 und die EP 0063264. Im Sinne der Anwendung ist es naheliegend, derartige Messfühler so nahe wie möglich an Teile heranzubringen, welche direkt oder indirekt beheizt werden und deren Kenntnis der Temperatur notwendig ist. Diesen Ausführungen zugrunde liegend beschreibt die WO 03/007660 einen Aufbau eines Glaskeramikkochfeldes, dessen Temperatur mittels eines derartigen Pt-Widerstandsmessfühlers erfasst wird. Genaugenommen beansprucht diese Erfindung eine auf eine flache Keramik gedruckte Pt-Widerstandsbahn zur Temperaturerfassung welche in unmittelbarer Nähe co-planar zur beheizten Glaskeramikfläche angeordnet ist. Allerdings ist den dort angegebenen Ausführungen nicht schlüssig zu entnehmen, wie die für Kochfelder an sich geforderten Temperaturerfassungskriterien technisch, mittels angegebenen Pt-Widerstandssensor, erreicht werden.

Die Aufgabe der Erfindung besteht darin, ein Verfahren anzugeben, bei dem kostengünstige, nicht kalibrierte Messfühler im eingebauten Zustand automatisch kalibriert werden, wobei eine maximale Betriebssicherheit des Keramikkochfeldes gewährleistet wird.

Erfindungsgemäß wird dies dadurch erreicht, dass die Recheneinheit bei Erreichen eines vorgegebenen Grenzwertes $T_{max}$ der Temperatur an einem Heizbereich oder einem Bereich des Keramikkochfeldes außerhalb der Heizbereiche einen Alarm, einen Schaltvorgang oder einen Regelvorgang auslöst.

So können auch nicht kalibrierte und somit kostengünstige Messfühler im Bereich des Kochfeldes eingesetzt werden und der Nutzen der Messfühler und die Betriebssicherheit des Keramikkochfelds wird weiter erhöht.

Insbesondere kann vorgesehen sein, dass die Messfühler als Widerstandssensoren mit jeweils einem von der Temperatur T abhängigen Widerstand R(T), insbesondere Platinwiderstandssensoren, mit jeweils bekannten elektrischen Widerstandskoeffizienten und als Kalibrierwert den vorerst unbekanntem Null-Widerstand $R_0$ bei einer Standardtemperatur $T_0$, insbesondere Raumtemperatur, z.B. 25°C, ausgebildet sind, R(T) bei der Temperatur $T_0$ durch die Recheneinheit bestimmt wird und dass $R_0$ nach der Formel $R_0 = (1 + \alpha \cdot \Delta T)/R(T)$ berechnet wird, wobei $\Delta T = T - T_0$ ist, und der Wert für $R_0$ als Kalibrierwert in der Speichereinheit abgelegt wird. Das Berechnungsverfahren zur Ermittlung von $R_0$ zeichnet sich durch besondere Einfachheit aus und kann auch von einer einfachen und kostengünstigen Recheneinheit ausgeführt werden.

In Weiterführung der Erfindung kann vorgesehen sein, dass das Verfahren erneut, manuell oder nach einer vorgegebenen Zeitspanne automatisch, ausgelöst wird und die Kalibrierwerte in der Speichereinheit aktualisiert werden. So kann ein zeitlicher Drift der Messfühler zuverlässig ausgeglichen werden und die Genauigkeit der Messfühler auch über einen langen Zeitraum gewährleistet werden.

In Weiterbildung der Erfindung kann vorgesehen sein, dass die Temperaturen der Heizbereiche in vorgegebenen Zeitintervallen in der Speichereinheit abgelegt werden. So werden auch Temperaturzeitverläufe erfassbar

In Weiterentwicklung der Erfindung kann vorgesehen sein, dass weitere Messfühler in Bereichen außerhalb der Heizbereiche, beispielsweise an Rückwand oder Seitenwänden eines Keramikkochfeldes oder dgl., vorgesehen sind, die in gleicher Weise kalibriert werden wie die Messfühler. So kann erfasst werden, ob Temperaturen, die für z.B. benachbarte Möbel bedenklich wären, überschritten werden.

Die Erfindung betrifft schließlich ein Verfahren zur Berechnung der Temperatur an beliebigen Stellen eines Keramikkochfeldes mit Heizbereichen, Messfühlern in diesen Heizbereichen, die insbesondere gemäß einem der Ansprüche 1 bis 5 kalibrierbar sind, gegebenenfalls mit weiteren Messfühlern in Bereichen außerhalb der Heizbereiche, beispielsweise an Rückwand oder Seitenwänden, weiters mit einer Recheneinheit und einer Speichereinheit.

Für eine optimale Betriebssicherheit eines Keramikkochfeldes ist es von Vorteil, die aktuelle Temperatur an möglichst vielen Stellen des Keramikkochfeldes zu kernen- Andererseits ist eine hohe Anzahl von Messfühlern mit hohen Kosten und deren Einbau mit einer Einschränkung der Designfreiheit verbunden.

Die Aufgabe der Erfindung besteht darin, ein Verfahren anzugeben, bei dem obige Nachteile vermieden werden, die Designfreiheit des Keramikkochfeldes erhöht wird und auch mit einer geringen Anzahl von Messfühlern kostensparend eine maximale Betriebssicherheit gewährleistet wird.

Erfindungsgemäß wird dies dadurch erreicht, dass die Recheneinheit aus den aktuellen Temperaturen an den Messfühlern und den in der Speichereinheit abgelegten Kennlinienfeldern für Temperaturverläufe die aktuelle Temperatur von beliebigen Bereichen des Keramikkochfeldes außerhalb der Heizbereiche ermittelt.

So kann auch in Bereichen, in deren unmittelbarer Nähe kein Messfühler angeordnet ist, die Temperatur bestimmt und bei vergleichsweise geringer Anzahl von Messfühlern und somit relativ geringen Kosten ein höhere Betriebssicherheit erreicht werden.

Es ist somit schlüssig dargelegt und auch das Ziel, dass unter Anwendung dieses Verfahrens mit einer geringen Anzahl von Messfühlern kostensparend eine maximale Betriebssicherheit gewährleistet werden kann.

Es existieren weiters Messfühler zur Ermittlung des Mittelwerts der Temperatur einer von einer Wärmequelle erwärmten Heizfläche, wie z.B. Glaskeramik Heizplatte, welcher zwischen der Wärmequelle und der Heizfläche und parallel zu dieser angeordnet ist, wobei der Messfühler einen Keramikkörper und eine auf dem Keramikkörper angebrachte temperaturabhängige Widerstandsbahn umfaßt und die Widerstandsbahn der Heizfläche zugewandt und von dieser beabstandet angeordnet ist.

Um einen kostengünstigen Messfühler anzugeben, bei dem die Designfreiheit eines Kochfeldes durch die geringeren Abmessungen des Temperatursensors erhöht wird, wobei eine maximale Betriebssicherheit des Keramikkochfeldes gewährleistet wird, wird vorgeschlagen, dass die Länge der Widerstandsbahn mindestens 200 mm beträgt, wobei die Widerstandsbahn außerhalb des Bereiches, in dem die Temperatur erfasst werden soll, an einer Kontaktierungsstelle elektrisch kontaktiert ist Durch die Kontaktierung außerhalb des Bereiches liegt, in dem die Temperatur erfasst werden soll, werden durch die Kontaktierung entstehende Störeinflüsse bei der Messung vermieden.

In Weiterbildung kann vorgesehen sein, dass die Widerstandsbahn im Bereich zwischen der Kontaktierungsstelle und temperatursensitiven Bereich des Messfühlers mit größerem, insbesondere mindestens doppeltem, Querschnitt ausgebildet ist im Vergleich zu jenem im Messbereich. So wird der elektrische Widerstand pro Länge der Widerstandsbahn in diesem Bereich wesentlich herabgesetzt und somit der Einfluss auf die Temperaturmessung in diesem Bereich gering gehalten.

Weiters kann vorgesehen sein, dass sich der Keramikkörper zur Verbesserung der mechanischen Stabilität gegen das freie, von der Kontaktierung abgekehrten Ende hin verjüngt. So kann bei ausreichender mechanischen Stabilität der Keramikkörper möglichst leicht und materialsparend gehalten werden, wobei weiters insbesondere am von der Kontaktierung abgekehrten Ende die Abschattung der Heizwendel durch den Keramikkörper minimal gehalten werden kann.

Insbesondere kann vorgesehen sein, dass der Keramikkörper im Bereich der Kontaktierung einen aufgeweiteten Bereich aufweiset wobei der Übergang zum übrigen schmäleren Bereich des Keramikkörpers vorzugsweise konkav ausgerundet ist.

In besonderer Ausgestaltung kann vorgesehen sein, dass zur Kontaktierung der Widerstandsschicht Kontaktierungsstücke aus elastisch federnden Material vorgesehen sind, die mit der Widerstandsbahn zugekehrten Ausdellungen versehen und mit dem Keramikkörper vernietet sind. So kann eine auch bei oftmaligen Wechseltemperaturbeanspruchungen nachhaltige Kontaktierung hergestellt werden.

Weiters kann vorgesehen sein, dass zur Kontaktierung der Widerstandsbahn ein flaches Bandmaterial verwendet wird, wobei das flache Bandmaterial zumindest bereichsweise zwischen dem Keramikkörper und der Widerstandsbahn angeordnet ist und mit der Widerstandsbahn verbunden ist, wobei die Oberfläche des Messfühlers eine ebene Fläche darstellt. So kann der Mittelwert der Temperatur im Heizbereich besonders zuverlässig erfasst werden.

In besonderer Ausgestaltung kann vorgesehen sein, dass die Widerstandsbahn des Messfühlers mit einer geschlossen Passivierschicht isoliert ist. So wird die Widerstandsbahn zuverlässig vor chemischen Einflüssen geschützt und behält länger ihre thermoelektrischen Eigenschaften, sodass eine zeitliche Drift des Messbereiches minimiert wird.

Die Erfindung wird unter Bezugnahme auf die beigeschlossenen Zeichnungen, in welchen Ausführungsformen dargestellt sind, näher beschrieben. Dabei zeigt:

> Fig.1 eine schematische Anordnung von Rechnereinheit und Messfühlern,
> Fig.2 eine Draufsicht eines Keramikkochfelds mit Heizbereichen,

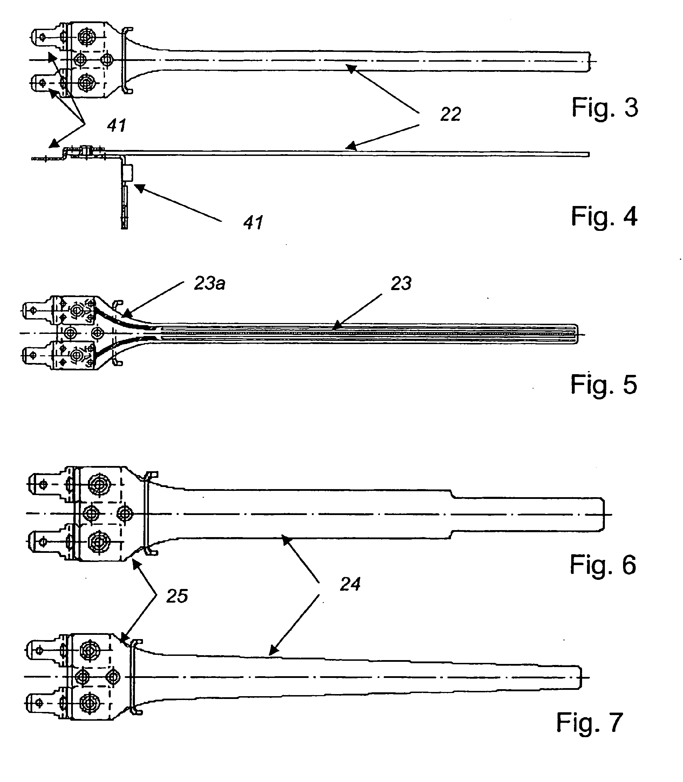

> Fig. 3 bis Fig. 7 unterschiedliche Ausformungen eines Messfühlers,

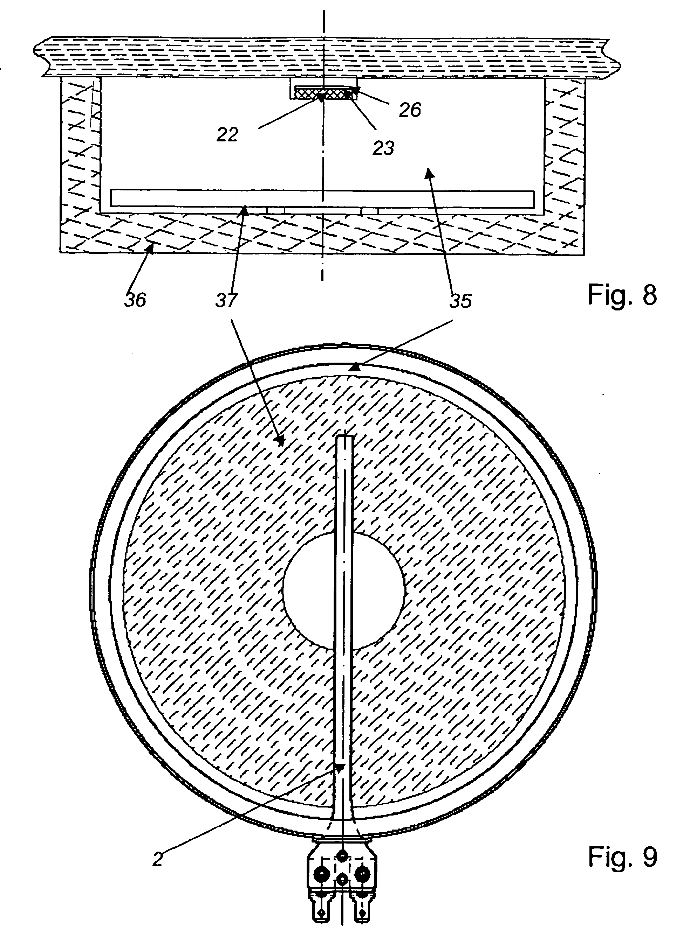

> Fig. 8 einen Schnitt durch ein Heizelement,
> Fig. 9 einen Draufsicht auf ein Heizelement, und
> Fig. 10 und Fig. 11 jeweils den Schnitt durch Kontaktierungen der Widerstandsbahn

Widerstandssensoren sind sehr kostengünstig einsetzbar. Insbesondere Platinwiderstandssensoren zeichnen sich durch eine nur geringe zeitliche Drift aus. Das Berechnungsverfahren zur Ermittlung von $R_0$ zeichnet sich durch besondere Einfachheit aus und kann auch von einer einfachen und daher kostengünstigen Rechereinheit ausgeführt werden.

In weiterer Ausgestaltung der Erfindung ist es vorteilhaft, auch im Hinblick auf kompakte Konstruktion des gesamten Kochfeldes 33, den/die Messfühler 2 im Bereich des Kochfeldes 33 nach dem temperaturabhängigen Widerstandsprinzip zu gestalten. Bauartgemäß handelt es sich hierbei um auf Keramik, vorzugsweise auf $Al_2O_3$, gedruckte Pt-Dickschichtwiderstandsbahnen, welche derart angeordnet sind, dass die beiden notwendigen elektrischen Kontakte an der gleichen Seite des Keramiksubstrats angeordnet sind.

Anstelle von Pt können auch andere Metalle, Übergangsmetalle und deren Legierungen, welche hinreichend thermooxidationsbeständig sind, als in Form einer Dickschichtswiderstandsbahn zu hier angesprochenen Sensorzwecken verwendet werden.

Ohne auf eine Theorie festgelegt zu sein, haben empirische Versuche gezeigt, dass die Länge der gedruckten Pt-Widerstandsbahn 23, wobei die mit Siebdruck erreichbare Dickschicht nach dem Einbrennen 50 μm nicht übersteigt, für praktische Temperaturmessgenauigkeiten in Glaskeramikkochfeldern 33 signifikant von deren Länge abhängt. Dem folgend wird zwingend vorgeschlagen die Bahnlänge zumindest im Bereich zwischen 150 mm und 3000 mm auszugestalten. Je nach Messgenauigkeitsanforderung sind erfindungsgemäß weitere Bahnlängen von 250 mm bis 2000 mm und in noch näher definierter Ausgestaltung 320 mm bis 1000 mm anzuwenden.

Um diese Länge auf der Sensorzunge aufbringen zu können, ist es notwendig, diese mäanderförmig darauf anzuordnen.

Die maximale Länge der Sensorzunge ist, wie unschwer zu verstehen, durch den Durchmesser des zu überwachenden Kochfeldes 3 gegeben. Unter Sensorzunge sei die die Widerstandsleiterbahn tragende Keramikkörper 22 welche in das Kochfeld hineinreicht, zu verstehen. Eine bevorzugte Ausführung sieht eine Sensorzungenlänge von max. 3/4 des Kochfelddurchmessers vor. Als weitere erfindungsgemäß bevorzugte Längen sind Abmessungen angegeben, welche von einem Fünftel bis zur Hälfte des Kochfelddurchmessers reichen.

Die Stegbreite der gedruckten Widerstandsbahnen 23 ist je nach Bahnlänge und Größe des zu überwachenden Kochfeldes 3 zu wählen. Im Regelfall wird eine Stegbreite zwischen 0.01 und 1 mm erfindungsgemäß als Vorteilhaft erachtet. Eine weiters bevorzugte Ausführung sieht Stegbreiten zwischen 0.1 und 0.5 mm vor, was erfindungsgemäß bevorzugt mittels Siebdruck-Technik bewerkstelligt wird. Mittels Siebdruck aufgebrachte Bahnen haben ausreichende Genauigkeit bezüglich Höhe und Breite, was wiederum für den gewünschten Sensorwiderstand von Bedeutung ist. Grundsätzlich jedoch ist jede physikalische Beschichtungsmethode, wie auch z. B. Sputtern geeignet solche elektrisch leitenden Bahnen auf ein Substrat aufzubringen.

Ein unter Betriebsbedingungen wesentliches Merkmal der gedruckten und eingebrannten Widerstandsbahn stellt der stärker ausgeprägte Abschnitt (2a) der zu den elektrischen Kontakten hinweist dar. Dieser wesentlich dicker aufgebrachte Abschnitt vermag thermomechanische Spannungen, welche durch das Temperaturgefälle zwischen dem Inneren und dem Äußeren des Kochfeldes unter Betriebsbedingungen hervorgerufen werden, soweit aufzunehmen, sodass ein Bruch der gedruckten Leiterbahn in diesem Bereich vermieden wird.

Ein weiterer dadurch erzielter maßgeblicher Effekt, welcher der Genauigkeit des Sensors zuträglich ist, ist die damit verbundene Herabsetzung des elektrischen Widerstandes im selbigen Zuleitungsbereich, welcher naturgemäß mitunter vom Querschnitt abhängig ist. Anders ausgedrückt ist $R_{Zuleitung}$ damit sehr viel kleiner als $R_{Widerstandbahn}$. Damit ergibt sich, dass der vom temperaturabhängigen Widerstandssensor ermittelte Temperaturwert genauer und von allfälligen Temperaturschwankungen im Kontaktierungsbereich nicht, bzw. nur in vernachlässigbar kleinem Ausmaß beeinflusst wird.

Das die Widerstandsbahn tragende Material ist bevorzugt aus Keramik, und in weiters bevorzugter Form aus $Al_2O_3$, gefertigt, wobei der Keramikträger erfindungsgemäß verjüngt ausgeführt ist. Diese Verjüngung, welche konkave Verbreiterung zur Sensorkontaktierung hin zu sehen ist (6), zeichnet soweit zur mechanischen Stabilität des Sensors verantwortlich, sodass auf Stützstege und/oder andere konstruktiv sichtbare Verstärkungen verzichtet werden kann.

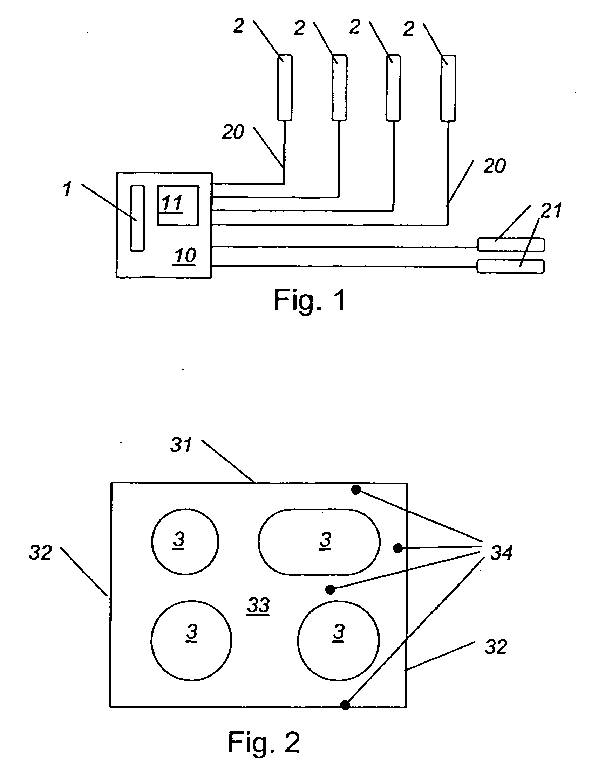

Je nach beabsichtigter Sensorgröße und aufzubringender Sensorbahnlänge kann das Substrat in verschiedener Art und Weise verjüngend bevorzugt ausgeführt sein. Fig. 1 und 2 zeigt gleichbleibenden Durchmesser der Sensorzunge nach der Verjüngung. Fig. 2 zeigt aufeinander folgende Verjüngungen der Sensorzunge, welche in beliebiger Anzahl aufeinanderfolgend angeordnet sein können.

Die erfindungsgemäße Formgebung kann sowohl schon im pulvermetallurgisch bedingten Herstellungsprozess erfolgen als auch zu einem späteren Zeitpunkt, wobei aus Keramikplatten mittels Laser die gewünschten Formteile ausgeschnitten werden, welche anschließend einer thermischen Behandlung unterworfen werden. Das bedeutet, dass der Keramikformteil einem Nachsinterprozess zugeführt wird. Nach einem genau definierten Temperaturprogramm werden die ausgeschnittenen Formteile auf Temperaturen bis zu 1600°C geglüht und anschliessend langsam abgekühlt. Dies hat zur Folge, dass das Keramikmaterial unter thermozyklischen Bedingungen, wie sie in einem Kochfeld 3 gegeben sind, keine Risse ausbildet bzw. sich nicht in ungewünschter Weise nachträglich verformt.

Vorzugsweise wird dieser Temperatubehandlungsschritt mit dem Einbrennen der aufgedruckten Widerstandsbahn 23 kombiniert.

Zusätzlich wird erfindungsgemäß bevorzugt, zum Schutz und gegebenenfalls zur Isolierung der Widerstandsbahn 23, über selbige eine Glas oder Glaskeramikschicht aufgebracht. Die Aufbringung erfolgt wiederum mittels Siebdruck-Technik. Diese schützende, isolierende Isolierschicht 26 wird anschließend durch Einbrennen, bei oder knapp unter der Schmelztemperatur der angewendeten Glas oder Keramikfritte auf dem die Widerstandsbahn 23 tragenden Substrat fixiert.

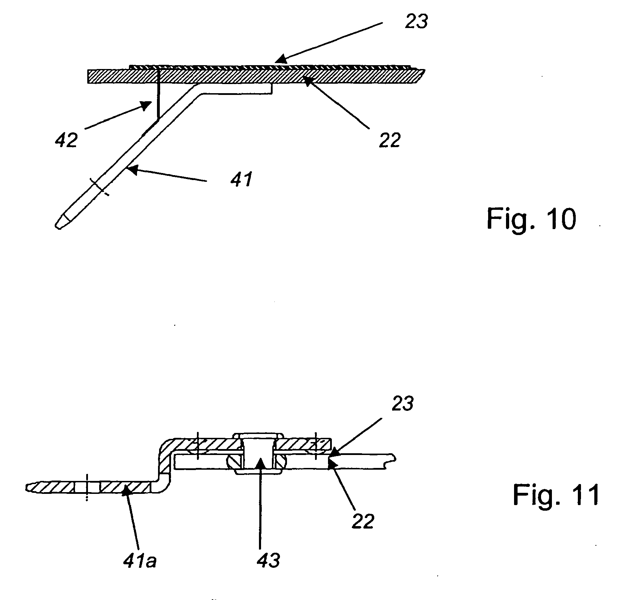

Elektrischer Kontakt zwischen der Kontaktierung 41 und der Widerstandsbahn 23 kann über ein Metallband 12 erfolgen, dass von der Kontaktierung 41 über einen Schlitz im Keramikkörper 22 mit der Widerstandsbahn 23 verbunden ist (siehe Fig. 10).

Auch kann eine federnde Kontaktierung 41a über eine Niete 13 mit dem Keramikkörper 22 verbunden sein, wobei die Widerstandbahn 23 dann zwischen die federnde Kontaktierung 41a und den Keramikkörper 22 geklemmt ist.

Fig.2 zeigt ein Keramikkochfeld 33 mit Heizbereichen 3. Die Anzahl, Form und Anordnung der Heizbereiche 3 auf einem Kochfeld kann hierbei beliebig variieren. Jedem Heizbereich ist ein Messfühler 2 zugeordnet (in Fig. 2 nicht dargestellt), die schematisch in Fig. 1 abgebildet sind. Die Messfühler 2 sind über Leitungen 20 mit einer Recheneinheit 10 elektrisch verbunden. Die Messfühler 2 sind vorerst nicht kalibriert und können beispielsweise als Widerstandssensoren ausgebildet sein.

Im Bereich der Recheneinheit 10 ist weiters ein Standardmessfühler 1 angeordnet, beispielsweise ein Platinwiderstandssensor mit bekanntem temperaturabhängigem Widerstand Rs(T), insbesondere ein PT-100- oder PT-1000-Sensor. In Zusammenwirkung mit der Recheneinheit 10 liefert der Standardmessfühler 1 den jeweils aktuellen Temperaturwert im Bereich der Recheneinheit 10.

Weitere Messfühler 21 können auch in Bereichen 34 außerhalb der Heizbereiche 3 angeordnet sein.

Die Kalibrierung der einzelnen Sensoren erfolgt dabei in der Art, dass in einem ersten Schritt die Temperatur in der im thermischen Gleichgewicht befindlichen Kochmulde mit Hilfe des kalibrierten Messfühlers gemessen wird. In einem weiteren Schritt werden nun die zu dieser Temperatur zugehörigen Widerstände der nicht kalibrierten Sensoren gemessen. Aus dieser

Information kann dann auf einfache Weise ein Kalibierfaktor bzw. der Widerstand der Sensoren bei definierten Temperatur, vorzugsweise 25°C, ermittelt und anschließend gespeichert werden.

Die Messfühler 2 sind Widerstandssensoren, insbesondere Platinwiderstandssensoren, welche einen von der jeweiligen Temperatur T abhängigen Widerstand R(T) mit jeweils bekannten elektrischen Widerstandskoeffizienten haben. Als Kalibrierwert den vorerst unbekanntem Null-Widerstand R0 bei einer Standardtemperatur T0, insbesondere Raumtemperatur, z.B. 25°C, ausgebildet sind, R(T) bei der Temperatur T0 durch die Recheneinheit (10) bestimmt wird, und dass R0 nach der Formel R0 = (1 + $\alpha \cdot \Delta T$)/R(T) berechnet wird, wobei $\Delta T$ = T - T0 ist, und der Wert für R0 als Kalibrierwert in der Speichereinheit (11) abgelegt wird.

Eine erfindungsgemäße Kalibrierung der Messfühler 2 erfolgt im Temperaturgleichgewicht, insbesondere vor der ersten Inbetriebnahme der Heizbereiche 3, also im Wesentlichen bei Raumtemperatur, weil dann die Temperatur an den Messfühlern 2 naturgemäß gleich jener am Standardmessfühler 1 ist. Entsprechende Kalibrierwerte für die Messfühler 2 werden vorteilhafter Weise in einer Speichereinheit 11 der Recheneinheit 10 abgelegt.

Wenn die Messfühler 2 als Widerstandssensoren ausgebildet sind, verhält sich ihr temperaturabhängiger Widerstand R(T) gemäß

$$R(T) = R_0 \times \left( 1 + \alpha \times \Delta T \ast \beta \times (\Delta T)^2 \right)$$

oder vereinfacht

$$R(T) = R_0 \times \left( 1 + \alpha \times \Delta T \right)$$

mit jeweils einem bekannten elektrischen Widerstandskoeffizienten $\alpha$ bzw. $\beta$ und vorerst unbekanntem Null-Widerstand $R_0$ bei einer Standardtemperatur $T_0$, insbesondere bei Raumtemperatur, z.B. 25°C, wobei $\Delta T = T - T_0$ ist. Zur Kalibrierung der Messfühler 2 bzw. der weiteren Messfühler 21 ist daher die Bestimmung von $R_0$ als Kalibrierwert erforderlich.

Gegenständliches Verfahren wird im Temperaturgleichgewicht, vorzugsweise vor der ersten Inbetriebnahme der Heizbereiche 3, durchgeführt, weil nur im Temperaturgleichgewicht davon ausgegangen werden kann, dass alle Messfühler 2, 21 und der Standardmessfühler 1 die gleiche Temperatur aufweisen.

Um ein Driften der Messfühler 2, 21 zu vermeiden und auch nach längerer Zeit die Genauigkeit derselben gewährleisten zu können, kann auch zu einem späteren Zeitpunkt das Verfahren zur Kalibrierung von Messfühlern 2, 21 ausgeführt werden, sodass die Kalibrierwerte aktualisiert und in der Speichereinheit 11 abgelegt werden. Diese erneute Kalibrierung kann händisch ausgelöst werden, oder nach einer vorgegebenen Zeitspanne, insbesondere nach einer für ein Temperaturgleichgewicht notwendigen Mindestdauer nach der letzten Inbetriebnahme der Heizbereiche 3, automatisch gestartet werden.

Weiters können zur Ermittlung der Temperaturen beispielsweise in Heizbereichen 3 auch bekannte Temperaturverläufe nutzbar gemacht werden. So Gibt es beispielsweise charakteristische Temperaturverläufe bei der Abkühlung eines Heizbereichs 3 nach dessen Abschaltung. Weiters wird aber auch die Temperatur eines Messfühlers 2 eines Heizbereichs 3, der nicht in Betrieb ist, nach einem charakteristischen Verlauf zunehmen, wenn benachbarte Heizbereiche 3 in Betrieb sind. Weitere charakteristische Temperaturverläufe in Abhängigkeit vom Betriebszustand benachbarter Heizbereiche 3 können auch von weiteren Messfühlern 21 außerhalb von Heizbereichen 3 registriert werden. Solche charakteristischen Temperaturverläufe in Abhängigkeit von Ort, Betriebszustand benachbarter Heizbereiche 3 und Zeit können als sogenannte Kennlinienfelder beschrieben und in der Speichereinheit 11 abgelegt werden. Bei Kenntnis der entsprechenden Wärmeübertragungseigenschaften in einem Keramikkochfeld 33 und den entsprechenden Kennlinienfelder kann daher durch die Recheneinheit 10 die Temperatur in beliebigen Bereichen 34, beispielsweise an Rückwand 31 oder Seitenwänden 32 aus den Temperaturen an Messfühlern 2, 21 in definierten Abständen ermittelt werden.

Nun kann zur Erhöhung der Betriebssicherheit für verschiedenen Bereiche 34 außerhalb der Heizbereiche, aber auch für Heizbereich 3 selbst, ein Grenzwert $T_{max}$ vorgegeben sein, bei dessen Erreichung ein Vorgang, wie beispielsweise ein Alarm, ein Schaltvorgang oder ein Regelvorgang, ausgelöst wird. So kann beispielsweise gewährleistet werden, dass sicherheitsbedenkliche Temperaturen in bestimmten Bereichen vermieden werden.

Für eine optimale Betriebssicherheit eines Keramikkochfeldes ist es von Vorteil, die aktuelle Temperatur an möglichst vielen Stellen des Keramikkochfeldes zu kennen. Die Kalibrierung der einzelnen Sensoren erfolgt dabei in der Art, dass in einem ersten Schritt die Temperatur in der im thermischen Gleichgewicht befindlichen Kochmulde mit Hilfe des kalibrierten Messfühlers gemessen wird. In einem weiteren Schritt werden nun die zu dieser Temperatur zugehörigen Widerstände der nicht kalibrierten Sensoren gemessen. Aus dieser Information kann dann auf einfache Weise ein Kalibrierfaktor bzw. der Widerstand der Sensoren bei definierten Temperatur, vorzugsweise 25°C, ermittelt und anschließend gespeichert werden.

**Patentansprüche**

1. Verfahren zur Kalibrierung von Temperatur-Messfühlern (2) in einem Heizbereich (3) eines Keramikkochfeldes (33) mit einer Recheneinheit (10), die mit den Messfühlern (2) über elektrische Leitungen (20) verbunden sind, wobei ein kalibrierter Standardmessfühler (1) beliebiger Ausführung, wie z.B. ein Thermoelement, Thermistor, oder auch ein Platinwiderstandssensor mit bekanntem temperaturabhängigem Widerstand $R_S(T)$, insbesondere ein PT-100- oder PT-1000-Sensor, im Bereich der Recheneinheit (10) vorgesehen ist, wobei im Temperaturgleichgewicht, insbesondere vor der ersten Inbetriebnahme der Heizbereiche (3), die Messfühler (2) mit dem Standardmessfühler (1) abgeglichen werden, und die entsprechenden Kalibrierwerte in einer Speichereinheit (11) der Recheneinheit (10) abgelegt werden, **dadurch gekennzeichnet, dass** die Recheneinheit (11) bei Erreichen eines vorgegebenen Grenzwertes $T_{max}$ der Temperatur an einem Heizbereich (3) oder einem Bereich (34) des Keramikkochfeldes (33) außerhalb der Heizbereiche (3) einen Alarm, einen Schaltvorgang oder einen Regelvorgang auslöst.

2. Verfahren nach Anspruch 1, **dadurch gekennzeichnet, dass** die Messfühler (2) als Widerstandssensoren mit jeweils einem von der Temperatur T abhängigen Widerstand R(T), insbesondere Platinwiderstandssensoren, mit jeweils bekannten elektrischen Widerstandskoeffizienten und als Kalibrierwert den vorerst unbekanntem Null-Widerstand $R_0$ bei einer Standardtemperatur $T_0$, insbesondere Raumtemperatur, z.B. 25°C, ausgebildet sind, R(T) bei der Temperatur $T_0$ durch die Recheneinheit (10) bestimmt wird, und dass $R_0$ nach der Formel $R_0 = (1 + \alpha \cdot \Delta T)/R(T)$ berechnet wird, wobei $\Delta T = T - T_0$ ist, und der Wert für $R_0$ als Kalibrierwert in der Speichereinheit (11) abgelegt wird.

3. Verfahren nach Anspruch 1 oder 2, **dadurch ge-**

**kennzeichnet, dass** das Verfahren erneut, manuell oder nach einer vorgegebenen Zeitspanne automatisch, ausgelöst wird und die Kalibrierwerte in der Speichereinheit (11) aktualisiert werden.

4. Verfahren nach einem der Ansprüche 1 bis 3, **dadurch gekennzeichnet, dass** die Temperaturen der Heizbereiche (3) in vorgegebenen Zeitintervallen in der Speichereinheit (11) abgelegt werden.

5. Verfahren nach einem der Ansprüche 1 bis 4, **dadurch gekennzeichnet, dass** weitere Messfühler (21) in Bereichen (34) außerhalb der Heizbereiche, beispielsweise an Rückwand (31) oder Seitenwänden (32) eines Keramikkochfeldes (33) oder dgl., vorgesehen sind, die in gleicher Weise kalibriert werden wie die Messfühler (2).

6. Verfahren zur Berechnung der Temperatur an beliebigen Stellen in einem Keramikkochfeldes (33) mit Heizbereichen (3), Messfühlern (2) in diesen Heizbereichen (3), die, insbesondere gemäß einem der Ansprüche 1 bis 5, kalibrierbar sind, gegebenenfalls mit weiteren Messfühlern (21) in Bereichen (34) außerhalb der Heizbereiche (3), beispielsweise an Rückwand (31) oder Seitenwänden (32), die insbesondere gemäß Anspruch 5 kalibrierbar sind, weiters mit einer Recheneinheit (10) und einer Speichereinheit (11), **dadurch gekennzeichnet, dass** die Recheneinheit (10) aus den aktuellen Temperaturen an den Messfühlern (2, 21) und in der Speichereinheit (11) abgelegten Kennlinienfeldern für Temperaturverläufe die aktuelle Temperatur an beliebigen Bereichen (34) des Keramikkochfeldes (33) außerhalb der Heizbereiche (3) ermittelt.

**Claims**

1. A method for calibrating temperature sensors (2) in a heating area (3) of a ceramic hob (33) with a computing unit (10) which are connected with the sensors (2) via electric lines (20), with a calibrated standard sensor (1) of any random configuration such as a thermocouple, thermistor or even a platinum resistance sensor with known temperature-dependent resistor R,(T), especially a PT-100 or PT-1000 sensor, being provided in the region of the computing unit (10), with the sensors (2) being calibrated to the standard sensor (1) in temperature balance, especially prior to the first start-up of the heating areas (3), and the respective calibration values being saved to a memory unit (11) of the computing unit (10), **characterized in that** the computing unit (11) initiates an alarm, a switching process or a control process upon reaching a predetermined limit value $T_{max}$ of the temperature in a heating area (3) or an area (34) of the ceramic hob (33) outside of the heating area (3).

2. A method according to claim 1, **characterized in that** the sensors (2) are arranged as a resistance sensor with a resistor R(T) each which is dependent on the temperature T, especially platinum resistance sensors, with known electric resistance coefficient and the momentarily unknown zero-sequence resistance $R_0$ as the calibration value at a standard temperature $T_0$, especially room temperature such as 25°C, R(T) is determined at temperature $T_0$ by the computing unit (10), and that $R_0$ is calculated according to the formula $R_0 = (1 + \alpha \cdot \Delta T)/R(T)$, with $\Delta T = T - T_0$ and the value of $R_0$ is saved as the calibration value to the memory unit (11).

3. A method according to claim 1 or 2, **characterized in that** the method is initiated renewed, manually or automatically after a predetermined time interval and the calibration values in the memory unit (11) are updated.

4. A method according to one of the claims 1 to 3, **characterized in that** the temperatures of the heating areas (3) are saved in predetermined time intervals to the memory unit (11).

5. A method according to one of the claims 1 to 4, **characterized in that** further sensors (21) are arranged in areas (34) outside of the heating areas, e.g. on the rear wall (31) or the side walls (32) of a ceramic hob (33) or the like, which further sensors are calibrated in the same manner as the sensors (2).

6. A method for calculating the temperature at random points in a ceramic hob (33) with heating areas (3), sensors (2) in said heating areas (3), which are calibrated, especially according to one of the claims 1 to 5, optionally with further measuring sensors (21) in areas (34) outside of the heating areas (3), for example on the rear wall (31) or the side walls (32) which can be calibrated especially according to claim 5, and further with a computing unit (10) and a memory unit (11), **characterized in that** the computing unit (10) determines the current temperature in different areas (34) of the ceramic hob (33) outside of the heating areas (3) from the current temperatures on the sensors (2, 21) and the characteristic curves for temperature curves stored in the memory unit (11).

**Revendications**

1. Procédé pour l'étalonnage de sondes de mesure de la température (2) dans une zone de chauffage (3) d'une plaque de cuisson en céramique (33) avec une unité de calculateur (10) reliée aux sondes de mesure (2) par des lignes électriques (20), dans lequel une sonde étalon (1) calibrée d'un type quelconque, par exemple un thermocouple, une thermistance ou une sonde à résistance au platine ayant une résistance en fonction de la température Rs(T) connue, de préférence une sonde Pt-100 ou Pt-1000, est prévue au niveau de l'unité de calculateur (10), dans lequel à l'équilibre thermique, en particulier avant la première mise en service des zones de chauffage (3), les sondes de mesure (2) sont étalonnées avec la sonde étalon (1) et les valeurs d'étalonnage correspondantes sont enregistrées dans une unité de mémoire (11) de l'unité de calculateur (10), **caractérisé en ce que** l'unité de calculateur (11) déclenche une alarme, une opération de commutation ou une opération de régulation lorsqu'une limite de température $T_{max}$ prédéterminée est dépassée dans une zone de chauffage (3) ou une zone (34) de la plaque de cuisson en céramique (33) située en dehors des zones de chauffage (3).

2. Procédé selon la revendication 1, **caractérisé en ce que** les sondes de mesure (2) sont conçues comme des sondes à résistance ayant chacune une résistance R(T) dépendant de la température T, en particulier des sondes à résistance au platine, avec des coefficients de résistance électrique connus et comme valeur d'étalonnage la résistance à zéro $R_0$, initialement inconnue, à une température de référence $T_0$, en particulier la température ambiante, par ex- 25°C, R(T) est déterminée à la température $T_0$ par l'unité de calculateur (10), et **en ce que** $R_0$ est calculée selon la formule $R_0 = (1 + \alpha \times \Delta T)/R(T)$, où $\Delta T = T - T_0$, et la valeur de $R_0$ est enregistrée comme valeur d'étalonnage dans l'unité de mémoire (11).

3. Procédé selon la revendication 1 ou 2, **caractérisé en ce que** le procédé est à nouveau déclenché manuellement ou automatiquement après un délai prédéterminé, et les valeurs d'étalonnage sont actualisées dans l'unité de mémoire (11).

4. Procédé selon l'une des revendications 1 à 3, **caractérisé en ce que** les températures des zones de chauffage (3) sont enregistrées à des intervalles prédéterminés dans l'unité de mémoire (11).

5. Procédé selon l'une des revendications 1 à 4, **caractérisé en ce que** d'autres sondes de mesure (21) sont prévues dans des zones (34) situées en dehors des zones de chauffage, par exemple sur la paroi arrière (31) ou les parois latérales (32) d'une plaque de cuisson en céramique (33) ou similaire, et sont étalonnées de la même manière que les sondes de mesure (2).

6. Procédé pour calculer la température en des points quelconques dans une plaque de cuisson en céramique (33) avec des zones de chauffage (3), des sondes de mesure (2) dans ces zones de chauffage (3) qui peuvent être étalonnées, en particulier selon l'une des revendications 1 à 5, éventuellement avec d'autres sondes de mesure (21) dans des zones (34) situées en dehors des zones de chauffage (3), par exemple sur la paroi arrière (31) ou les parois latérales (32), et qui peuvent être étalonnées, en particulier selon la revendication 5, ainsi qu'avec une unité de calculateur (10) et une unité de mémoire (11), **caractérisé en ce que** l'unité de calculateur (10) détermine, à partir des températures actuelles au niveau des sondes de mesure (2, 21) et des champs de caractéristique pour l'évolution de la température enregistrés dans l'unité de mémoire (11), la température actuelle dans n'importe quelles zones (34) de la plaque de cuisson en céramique (33) situées en dehors des zones de chauffage (3).

2    2    2    2

20

1

11

20

10

21

**Fig. 1**

31

32

3    3

33

3    3

34

32

**Fig. 2**

Fig. 3

41

22

Fig. 4

41

23a

23

Fig. 5

24

Fig. 6

25

24

Fig. 7

Fig. 8

Fig. 9

23

42

41

22

## Fig. 10

23

41a

43

22

## Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0806886 A
- US 6155711 A
- DE 3100852
- US 4371861 A
- EP 0063264 A
- WO 03007660 A